Europäisches Patentamt

European Patent Office

Office européen des brevets

(11) Numéro de publication: **0 390 712**
**A1**

## (12) DEMANDE DE BREVET EUROPEEN

(21) Numéro de dépôt: **90420153.0**

(22) Date de dépôt: **27.03.90**

(51) Int. Cl.5: **G01B 11/00**

(30) Priorité: **29.03.89 FR 8904380**

(43) Date de publication de la demande:
**03.10.90 Bulletin 90/40**

(84) Etats contractants désignés:
**AT BE CH DE DK ES FR GB GR IT LI LU NL SE**

(71) Demandeur: **CELETTE S.A.**
**67 rue Maugiron**
**F-38200 Vienne(FR)**

(72) Inventeur: **Celette, Germain**
**1 Rue Porterne**
**F-38200 Vienne(FR)**
Inventeur: **Jacquet, Bernard**
**75 rue de Gerland**
**F-69007 Lyon(FR)**

(74) Mandataire: **Maureau, Philippe et al**
**Cabinet Germain & Maureau Le Britannia -**
**Tour C 20, bld Eugène Déruelle**
**F-69432 Lyon Cédex 03(FR)**

(54) **Dispositif de mesure du positionnement et du déplacement d'un point, et application à l'équipement d'un marbre pour le contrôle et le redressement de véhicules automobiles.**

(57) Ce dispositif comprend une bande marquée (12,13,14) associée à chaque direction selon laquelle l'élément peut être déplacé, et un ensemble de capteurs magnétiques ou optiques, solidaires de l'élément.

Application à l'équipement d'un appareil pour le contrôle de véhicules automobiles.

FIG.1

## Dispositif de mesure du positionnement et du déplacement d'un point, et application à l'équipement d'un marbre pour le contrôle et le redressement de véhicules automobiles

La présente invention a pour objet un dispositif de mesure du positionnement et du déplacement d'un point, et son application à l'équipement d'un marbre pour le contrôle et le redressement de véhicules automobiles.

Lorsqu'un véhicule automobile est accidenté il convient d'effectuer un redressement contrôlé des parties déformées afin que celles-ci soient ramenées dans leur position d'origine. A cet effet, est utilisé un marbre comprenant un châssis métallique rectangulaire sur lequel le véhicule est monté par l'intermédiaire de quatre mors venant pincer le bas de caisse, les cotes longitudinales, latérales et en hauteur des quatre mors étant fonction du type de véhicule à réparer. Une fois le véhicule positionné de façon correcte et fixé sur le marbre, il est procédé à la mise en place sur le marbre et sous le véhicule d'un cadre de mesure portant des échelles graduées longitudinales. Après positionnement du cadre par rapport au véhicule en considérant trois points de réglage servant de référence, pris dans une partie non déformée du véhicule, il est procédé au blocage du châssis sur le marbre. Sur le cadre de mesure sont destinées à être fixées transversalement des règles graduées sur lesquelles peuvent coulisser des chariots portant des doigts de mesure ou "tours" réglables verticalement et dont la position en hauteur est repérée par un index gradué.

Le réparateur dispose pour chaque type de véhicule de trois cotes d'un certain nombre de points caractéristiques, ainsi que des accessoires destinés à la mesure de chaque point. Les différentes valeurs sont lues respectivement sur les règles longitudinales, sur les règles transversales et sur les tours. Cette solution ne donne pas toute satisfaction pour de nombreuses raisons. Tout d'abord, elle impose une mesure purement manuelle, effectuée parfois dans des zones difficilement accessibles, pouvant engendrer des erreurs. D'autre part, il est pas possible, compte tenu des déformations du véhicule et de la présence des moyens de fixation, de redressement et de contrôle de celui-ci, d'accéder en tous points de la carrosserie et du châssis. Enfin, il est nécessaire à partir des coordonnées de référence, de calculer les coordonnées des points identifiés sur la fiche technique, ce qui est long, fastidieux et peut être source d'erreur. Il faut également que l'opérateur compare les valeurs de la mesure effectuée aux valeurs du point mesuré figurant sur la fiche de référence.

Le but de la présente invention est de rendre automatique la lecture de la position d'un point, après avoir amené manuellement ou automatiquement au niveau de celui-ci, un élément de mesure. De ce fait, les erreurs résultant d'une lecture directe ainsi que les erreurs d'interprétation sont supprimées, d'autant plus qu'il est possible de comparer automatiquement la ou les valeurs mesurées à des valeurs de référence.

A cet effet, le dispositif selon l'invention comprenant, associée à chaque direction le long de laquelle l'élément peut être déplacé, une bande marquée en vue d'une détection optique ou magnétique, est caractérisé en ce que la bande marquée comporte deux pistes parallèles, une première piste permettant de connaître le sens de déplacement de l'élément, et le déplacement de celui-ci avec une résolution fine, et une seconde piste permettant de connaître la position de l'élément, en valeur absolue, par rapport au point de référence.

Il suffit à l'opérateur de déplacer l'élément de mesure pour l'amener au contact du point dont la position est à mesurer, pour que les valeurs fournies par les capteurs soient transmises à un dispositif d'affichage et éventuellement de comparaison avec des valeurs théoriques.

Selon une première forme d'exécution de ce dispositif, la bande marquée est fixe et l'ensemble de capteurs est solidaire de l'élément déplaçable dont la position est à mesurer.

Selon une autre forme d'exécution de ce dispositif, essentiellement envisageable lorsque les distances de déplacement de la partie mobile sont faibles, l'ensemble de capteurs est fixe et la bande marquée est solidaire de la partie mobile.

Il est ainsi possible de connaître la position d'un point sans être obligé de faire passer l'élément de mesure au niveau d'un point de référence pour initialiser le système. Ceci est intéressant notamment dans le cas où il n'est pas possible de déplacer un élément de mesure tout le long de la bande qui lui est associée, en raison par exemple de la gêne procurée par les pinces de fixation du bas de caisse d'un véhicule lorsque le dispositif de mesure est associé à un marbre utilisé pour la réparation et le contrôle de la carrosserie d'un véhicule.

Les capteurs sont avantageusement constitués par des jauges magnétorésistives, dans la mesure où les bandes marquées sont des bandes magnétiques.

Les capteurs sont constitués par des détecteurs optiques, dans la mesure où les bandes marquées sont des pistes marquées par gravure.

Dans le cas de pistes marquées par gravure en vue d'une détection optique, deux techniques sont utilisables :

- La première piste est constituée d'un marquage unique de zones alternées absorbantes et réfléchissantes distantes d'une valeur d, associé à l'élément dont la position et le déplacement doivent être mesurées et de deux cellules de détection optique décalées longitudinalement d'une valeur n + d/2 où n est un nombre entier.

- La première piste est constituée de deux marquages de zones alternées absorbantes et réfléchissantes distantes d'une valeur d, chaque marquage étant décalé par rapport à l'autre de d/2 dans le sens longitudinal, et associé à l'élément dont la position et le déplacement doivent être mesurés, et de deux cellules de détection optique placées dans le même plan transversal.

Dans les deux cas, les signaux provenant des deux capteurs lors des déplacements longitudinaux sont déphasés de $\pi/2$, et le troisième capteur est associé à la seconde piste.

Conformément à une autre forme d'exécution, dans le cas de pistes marquées magnétiquement, ce dispositif comporte trois capteurs associés à la première piste, dont les deux premiers sont en opposition de phase et dont le troisième est déphasé avec les premier et second capteur de $\pm \frac{\pi}{2}$, tandis que le quatrième capteur est associé à la seconde piste. Le fait de disposer de trois capteurs au niveau de la première piste permet de s'affranchir d'un champ parasite homogène.

Selon une forme de réalisation de ce dispositif, la deuxième piste comprend une pluralité de zones codées disposées les unes à la suite des autres, de longueur supérieure à la période de codage de la première piste, et repérées chacune par rapport au point de référence, chaque zone codée comprenant un signal de début et un signal de fin de zone, ainsi que plusieurs bits de codage, la rencontre par le capteur d'un signal de début ou de fin de zone initialisant un compteur qui s'incrémente ou se décrémente en fonction des informations relevées par les trois premiers capteurs sur la première piste. Dans le cas du contrôle de la position d'un point au contact duquel est amené l'élément équipé des capteurs, les informations relevées par les capteurs sont transmises à un calculateur qui compare ces informations avec les informations correspondant à la position théorique, qui sont mémorisées dans le calculateur.

Dans le cas de son application au contrôle de la carrosserie d'un véhicule par mesure de la position dans l'espace de points spécifiques de cette carrosserie, le dispositif comporte trois séries de capteurs associées à trois séries de bandes magnétiques, dont la première série comprend des bandes fixées longitudinalement sur le cadre de mesure, dont la deuxième série comprend des bandes fixées sur les règles transversales au cadre, et dont la troisième série comprend des bandes fixées sur les tours montées réglables verticalement sur les règles transversales, chaque zone codée de chaque bande magnétique comportant un bit d'adresse permettant de reconnaître les informations fournies par les différents capteurs.

Selon une forme préférée d'exécution, dans ce dernier cas, le calculateur est agencé pour déterminer à partir des coordonnées théoriques d'un certain nombre de points caractéristiques d'un véhicule, les coordonnées réelles de celui-ci en tenant compte du plan de référence déterminé par plusieurs points choisis par l'opérateur dans une zone non déformée du véhicule. Cela permet à l'opérateur d'établir un plan de référence dans une zone non déformée du véhicule, sans risque d'erreurs pour le calcul des coordonnées des différents points à contrôler par rapport à ce plan de référence, puisque ces coordonnées sont calculées automatiquement.

Afin de limiter l'encombrement du dispositif et la gêne qu'il pourrait procurer aux utilisateurs, la transmission des informations des capteurs au calculateur est effectuée par un moyen de transmission sans fil tel que hautes-fréquences, ultra-sons, infra-rouge.

De toute façon, l'invention sera bien comprise à l'aide de la description qui suit, en référence au dessin schématique annexé représentant, à titre d'exemple non limitatif, une forme d'exécution d'un marbre pour la réparation de véhicules équipé du dispositif de mesure selon l'invention :

Figure 1 est une vue en perspective de ce marbre ;

Figure 2 est une vue d'une piste magnétique servant à la mesure dans une direction de la position d'un élément.

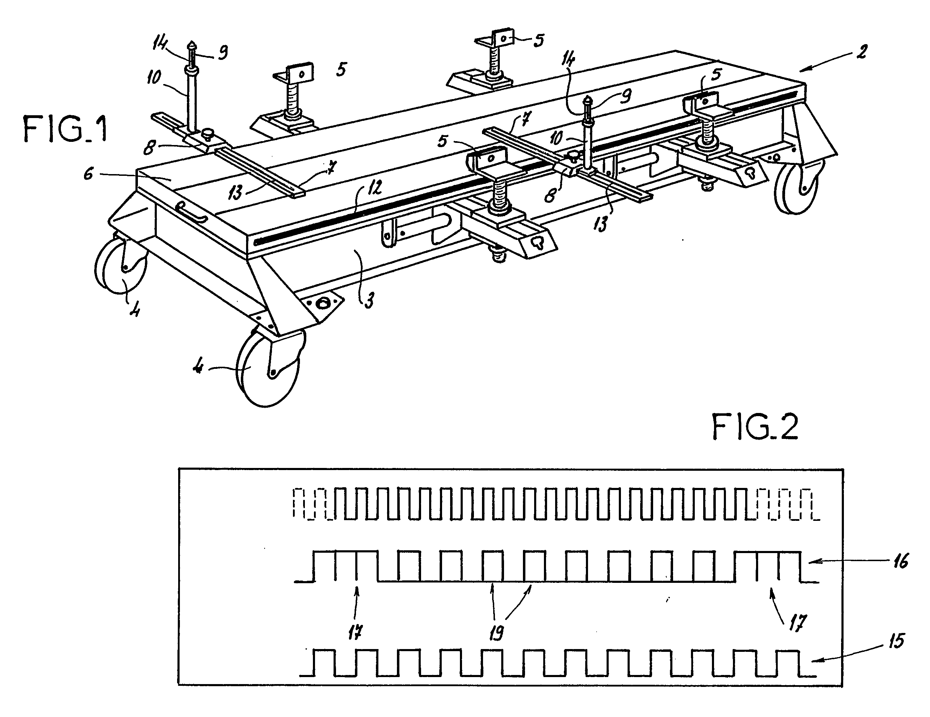

Le marbre représenté à la figure 1 et désigné par la référence générale 2 comprend un châssis 3, monté sur des roues 4, équipé de quatre pinces 5 destinées à réaliser la fixation du véhicule au niveau du bas de caisse de celui-ci.

Après fixation du véhicule sur le marbre, il est procédé au positionnement sur le marbre et en-dessous du véhicule, d'un cadre de mesure 6. Une fois positionné, ce cadre de mesure est immobilisé par rapport au marbre. Sur le cadre de mesure peuvent être fixées transversalement des règles 7 sur lesquelles peuvent coulisser des chariots 8 portant des tours ou doigts télescopiques 9 réglables verticalement.

Pour déterminer la position d'un point dans l'espace, il convient de disposer de trois coordonnés rectangulaires correspondant, respectivement, à la position longitudinale de la règle 7 sur le cadre 6, à la position transversale du chariot 8 sur la règle 7 et à la position verticale du doigt 9 à l'intérieur de la colonne 10 dans laquelle il est monté réglable verticalement.

A cet effet, le cadre 6 est équipé, sur chacune de ses parois longitudinales, d'une bande magnétique 12 avec laquelle est destiné à coopérer un élément de mesure, non représenté au dessin, monté sur chaque règle transversale 7.

Sur chaque règle transversale 7 est montée une bande magnétique 13 à laquelle est associé un élément de mesure solidaire du chariot 8. Enfin, sur chaque tige 9 est fixée une bande magnétique 14 à laquelle est associé un élément de mesure solidaire de la colonne 10.

Comme montré à la figure 2, chaque bande magnétique possèdant une largeur de 8 mm, est marquée de deux pistes 15 et 16.

La première piste 15 sert d'horloge et permet de connaître le déplacement du capteur et son sens de déplacement avec une résolution de 1 mm. Si la période de l'horloge de synchronisation est de 2 mm, il est associé à cette piste trois jauges magnétorésistives dont la seconde est décalée par rapport à la première d'une valeur de 2 mm et dont la troisième est décalée par rapport à la seconde de 3 mm. Les deux premières jauges sont donc montées en opposition de phase, tandis que la troisième jauge est déphasée de ± $\pi/2$ par rapport aux première et seconde jauges.

Ces trois premières jauges permettent de connaître le déplacement du capteur et son sens de déplacement avec une résolution de 1 mm. La seconde piste 16 à laquelle est associé un capteur constitué par une jauge magnétorésistive comporte un certain nombre de zones de codage, chacune d'une longueur de 40 mm, permettant de connaître, lorsqu'un capteur se trouve sur une zone, la distance entre ce capteur et un point de référence de la bande magnétique considérée par reconnaissance codée de ladite zone.

A cet effet, chaque zone comprend un signal 17 indicatif du début d'une zone et de la fin de la zone précédente, constitué par trois bits à un, et de bits intermédiaires de codage 19 au nombre de huit dans le cas présent.

Chaque bit de codage est formé de l'état du code et d'un 0 afin de ne rencontrer trois fois de suite l'état 1 que pour le signal de séparation des zones codées.

Chaque zone codée s'étendant sur 40 mm comporte vingt bits, il est ainsi possible, avec cet agencement, de coder jusqu'à 255 en système décimal, ce qui correspond à une bande 40 x 255 = 10 200 mm soit 10,20 m.

Ainsi, tous les 40 mm, la deuxième piste 16 permet de connaître la position de l'élément de mesure à 4 cm près. La première piste 15 donnant une précision d'1 mm, il suffit chaque fois que l'on rencontre un signal de début de zone au niveau de la seconde piste 16, d'initialiser un compteur qui s'incrémente et se décrémente suivant le sens de déplacement de l'élément de mesure.

Ces informations sont traitées par le logiciel d'un calculateur, la partie électronique de mesure se contentant d'envoyer au calculateur par un système sans fils, l'état des deux pistes, ceci tous les millimètres, ainsi que l'adresse du point de mesure.

Lorsque le déplacement à mesurer est inférieur, le codage peut s'effectuer sur 7 bits, ce qui correspond à une longueur de zone de 36 mm. Il est alors possible de coder jusqu'à 127 en système décimal, ce qui correspond à une bande de 36 x 127 = 4572 mm.

Sur des échelles de mesure de longueur inférieure, il est possible de réaliser le codage sur un nombre de bits encore inférieur, la longueur de zone étant de 24 mm pour un codage sur 4 bits.

En pratique, après positionnement du cadre de mesure sous le véhicule, l'opérateur détermine un plan de référence à partir de trois points choisis dans une zone non déformée du véhicule dont il fournit les coordonnées au calculateur.

A partir de ces informations, et de la connaissance des coordonnées théoriques des points au niveau desquels les contrôles doivent être effectués, le calculateur détermine les coordonnées réelles des points où les contrôles doivent être effectués. Il suffit à l'opérateur d'amener les éléments de contrôle successivement à ces différents points, les informations saisies automatiquement étant envoyées, après validation par l'opérateur, au calculateur qui compare les valeurs mesurées avec les valeurs théoriques.

Cette technique est très intéressante car supprimant les opérations de lecture des mesures et de calcul pour l'opérateur, qui se contente d'amener les éléments de mesure aux différents points de contrôle.

## Revendications

1. Dispositif de mesure du positionnement d'un point et du déplacement d'un élément comprenant, associée à chaque direction le long de laquelle l'élément peut être déplacé, une bande marquée en vue d'une détection optique ou magnétique, caractérisé en ce que la bande marquée (12,13,14) comporte deux pistes parallèles, une première piste (15) permettant de connaître le sens de déplacement de l'élément, et le déplacement de celui-ci avec une résolution fine, et une seconde piste (16) permettant de connaître la position de l'élément, en valeur absolue, par rapport au point de référence.

2. Dispositif selon la revendication 1, caractérisé en ce que la bande marquée (12,13,14) est fixe et l'ensemble de capteurs est solidaire de l'élément déplaçable (7,8,9) dont la position est à mesurer.

3. Dispositif selon la revendication 1, caractérisé en ce que l'ensemble de capteurs est fixe et la bande marquée est solidaire de la partie mobile.

4. Dispositif selon l'une quelconque des revendications 1 à 3, caractérisé en ce que la bande marquée comporte des pistes gravées, et les capteurs sont constitués par des détecteurs optiques.

5. Dispositif selon la revendication 4, caractérisé en ce que la première piste est constituée d'un marquage unique de zones alternées absorbantes et réfléchissantes distantes d'une valeur d, associé à l'élément dont la position et le déplacement doivent être mesurées et de deux cellules de détection optique décalées longitudinalement d'une valeur $n + d/2$ où $n$ est un nombre entier.

6. Dispositif selon la revendication 4, caractérisé en ce que la première piste est constituée de deux marquages de zones alternées absorbantes et réfléchissantes distantes d'une valeur d, chaque marquage étant décalé par rapport à l'autre de d/2 dans le sens longitudinal, et associé à l'élément dont la position et le déplacement doivent être mesurés, et de deux cellules de détection optique placées dans le même plan transversal.

7. Dispositif selon la revendication 1, caractérisé en ce que les capteurs sont constitués par des jauges magnétorésistives, dans la mesure où les bandes marquées sont des bandes magnétiques.

8. Dispositif selon la revendication 7, caractérisé en ce qu'il comporte, associé à l'élément dont la position et le déplacement doivent être mesurés, trois capteurs associés à la première piste (15), dont les deux premiers sont en opposition de phase et dont le troisième est déphasé avec les premier et second capteur de $\pm \frac{\pi}{2}$, tandis que le quatrième capteur est associé à la seconde piste (16).

9. Dispositif selon la revendication 8, caractérisé en ce que la deuxième piste (16) comprend une pluralité de zones codées disposées les unes à la suite des autres, de longueur supérieure à la période de codage de la première piste, et repérées chacune par rapport au point de référence, chaque zone codée comprenant un signal (17) de début et un signal (18) de fin de zone, ainsi que plusieurs bits de codage (19), la rencontre par le capteur d'un signal de début ou de fin de zone initialisant un compteur qui s'incrémente ou se décrémente en fonction des informations relevées par les trois premiers capteurs sur la première piste.

10. Dispositif selon l'une quelconque des revendications 1 à 9, caractérisé en ce que, dans le cas du contrôle de la position d'un point, les informations relevées par les capteurs sont transmises à un calculateur qui compare ces informations avec les informations correspondant à la position théorique, qui sont mémorisées dans le calculateur.

11. Dispositif selon l'une quelconque des revendications 1 à 10, caractérisé en ce que , dans le cas de son application au contrôle de la carrosserie d'un véhicule, par mesure de la position dans l'espace de points spécifiques de cette carrosserie, il comporte trois séries de capteurs associées à trois séries de bandes magnétiques (12,13,14), dont la première série comprend des bandes (12) fixées longitudinalement sur le cadre de mesure (6), dont la deuxième série comprend des bandes (13) fixées sur les règles (7) transversales au cadre, et dont la troisième série comprend des bandes (14) fixées sur les tiges (9) ou les colonnes (10) montées sur les règles transversales, chaque zone codée de chaque bande magnétique comportant un bit d'adresse permettant de reconnaître les informations fournies par les différents capteurs.

12. Dispositif selon l'ensemble des revendications 10 et 11, caractérisé en ce que le calculateur est agencé pour déterminer à partir des coordonnées théoriques d'un certain nombre de points caractéristiques d'un véhicule, les coordonnées réelles de celui-ci en tenant compte du plan de référence déterminé par plusieurs points choisis par l'opérateur dans une zone non déformée du véhicule.

13. Dispositif selon l'une quelconque des revendications 11 à 12, caractérisé en ce que la transmission des informations des capteurs au calculateur est effectuée par un système sans fils, tel que hautes-fréquences, ultra-sons, infra-rouges.

FIG.1

14 9
10
8
6
4
13 7
12
3
4

5
5

14
9
10
5
8
13
7

5

2

EP 0 390 712 A1

FIG.2

16

17
19
17

15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | MEASURMENT TECHNIQUES<br>vol. 24, no. 10, octobre 1981, pages 836-838, New York, US; V.A. SOITU et al.: "The VIM-28 three-coordinate universal measuring instrument" * pages 836-837; figure 1 *<br>--- | 1,3,11 | G 01 B 11/00 |
| A | US-A-3 330 964 (G.L. HOBROUGH et al.)<br>* colonne 2, lignes 55-60; colonne 6, lignes 39-70; figures 1-3 *<br>--- | 1,3,5 | |
| A | US-A-4 263 506 (H.C. EPSTEIN)<br>* abrégé; colonne 2, lignes 28-46; figures 1,5 *<br>--- | 1,4 | |
| A | GB-A-2 075 185 (PHAROS AB)<br>* abrégé; pages 3,4; figures 1,2 *<br>--- | 1,2,10-12 | |
| A | EP-A-0 250 711 (DR. J. HEIDENHAIN GMBH)<br>* colonne 2; figures 1,2 *<br>--- | 5 | **DOMAINES TECHNIQUES RECHERCHES (Int. Cl.5)** |
| A | EP-A-0 157 034 (SONY MAGNESCALE INC.)<br>* revendication 5 *<br>----- | 7 | G 01 B<br>G 01 D |

Le présent rapport a été établi pour toutes les revendications

| Lieu de la recherche | Date d'achèvement de la recherche | Examinateur |
|---|---|---|
| BERLIN | 03-07-1990 | VORROPOULOS G |